# EUROPÄISCHE PATENTSCHRIFT

(11) **EP 2 938 451 B1**
(45) Veröffentlichungstag und Bekanntmachung des Hinweises auf die Patenterteilung: **22.02.2017**
(21) Anmeldenummer: 13821487.9
(22) Anmeldetag: 23.12.2013
(51) Int. Cl.: B23D 15/04, B23D 25/04, B23D 25/08, B23D 15/08, B23D 15/06

(54) **MITFAHRENDE HYDRAULISCHE SCHERE OHNE STÄNDER**
CO-MOVING HYDRAULIC SHEARS WITHOUT STAND
CISAILLES HYDRAULIQUES MOBILES, DÉPOURVUES DE SUPPORT

(30) Priorität: 28.12.2012 DE 102012224532
(43) Veröffentlichungstag der Anmeldung: 04.11.2015
(73) Patentinhaber: SMS group GmbH, 40237 Düsseldorf (DE)
(72) Erfinder: BEUTER, Matthias, 57319 Bad Berleburg (DE); EHLS, Bernhard, 57271 Hilchenbach (DE)
(74) Vertreter: Klüppel, Walter
(86) Internationale Anmeldenummer: PCT/EP2013/077961
(87) Internationale Veröffentlichungsnummer: WO 2014/102262

(56) Entgegenhaltungen:
- EP-A1- 2 033 730
- CN-A- 101 804 481
- DE-A1- 2 739 327
- GB-A- 2 405 118

## Beschreibung

Die Erfindung betrifft eine Schere zum Schneiden von Flachmaterial nach dem Oberbegriff von Anspruch 1.

Eine solche Schere ist aus EP 2 033 730 A bekannt.

Bei diskontinuierlich oder kontinuierlich produzierten Bändern bzw. Blechen, im Folgenden Flachmaterial genannt, wie sie z.B. beim Walzen entstehen, ist es bekannt, dass das Flachmaterial zur Weiterverarbeitung in handhabbareStücke getrennt wird. Hierzu werden Trenneinrichtungen eingesetzt, z.B. in Form von Scheren.

Bei einer Schere hat der Schnittspalt im Allgemeinen für ein bestimmtes Material bei vorgegebener Dicke einen optimalen, spezifischen Wert. Für einen sauberen Schnitt muss dieser konstant über den gesamten Schneidweg sein. Er darf sich durch resultierende Kräfte also nicht vergrößern, weil ansonsten die Qualität bzw. die Güte des Schnittes unbefriedigend ist, gleichzeitig erhöht sich der Verschleiß der Messer.

Zur Vermeidung einer Veränderung des Schnittspaltes werden Führungselemente benutzt, die eine Bewegung der beteiligten Messer in Schnittrichtung erlauben. Gleichzeitig jedoch setzen diese Führungselemente allen anderen Bewegungen den höchstmöglichem Widerstand entgegen, um unerwünschte Bewegungen, wie dem Nachgeben der Konstruktion durch während des Schneidvorganges resultierende Kräfte, zu verhindern.

Eine gattungsgemäße Schere ist aus DE 43 36 626 C2 bekannt, die einen starr angeordneten Obermesserträger und einen relativ dazu beweglichen Untermesserträger aufweist. Die Krafteinleitung der notwendigen hohen Schnittkräfte erfolgt mechanisch mit einem Verstellantrieb, der über ein Schneckenradgetriebe auf den Untermesserträger wirkt. Die aus den in das Blech eingeleiteten Schnittkräften resultierenden Kräfte erfordern eine stabile Führung der Messer zueinander, da diese den Schnittspalt, also den Abstand des Obermessers zum Untermesser, vergrößern wollen. Die Führungselemente für den beweglichen Untermesserträger sind in Form von massiven Rundstangen ausgebildet, mit denen die beim Schneidvorgang auftretenden Querkräfte aufgenommen werden können. Die Trennung des Verstellantriebs von den Führungselementen hat die Nachteile eines großen konstruktiven Aufwands verbunden mit entsprechend großen Abmessungen, was auch zu erhöhten Kosten führt.

Aus JP 07223109 A ist eine Schere bekannt, bei der ein beweglicher Obermesserträger durch Hydraulikzylinder relativ zu einem feststehenden Untermesserträger bewegt wird. Für eine exakte Führung des bewegten Obermesserträgers ist ein zusätzlicher Führungsmechanismus vorgesehen.

Bei diskontinuierlich produziertem Flachmaterial reicht eine ortsfeste Montage der verwendeten Schere. Bei einer kontinuierlichen Vorschubbewegung des Flachmaterials ist es erforderlich, die Schere mit gleicher Geschwindigkeit wie das Band zu bewegen, soll das Flachmaterial quer zur Vorschubrichtung geteilt werden. Um die Schere mit dem Flachmaterial mit zubewegen, kann, wie in DE 2 057 751 A beschrieben, das Flachmaterial selbst als Antrieb dienen. Alternativ ist die Beschleunigung der Querteilschere auch mit Unterstützung eines hydraulischen Kolbens, wie in DE 27 39 327 A1 dargestellt, möglich. Zusätzlich wird bezüglich einer Schere gemäß DE 27 39 327 A1 darauf hingewiesen, dass hierbei zum Schneiden von Flachmaterial hydraulisch betätigbare Ablängwerkzeuge vorgesehen sind.

GB 2 405 118 zeigt eine Schere, bei der Verstelleinrichtungen in Form von Hydraulikzylindern vorgesehen sind, um damit einen Obermesserträger und einen Untermesserträger relativ zueinander zu bewegen. Hierbei sind Kolbenstangen dieser Hydraulikzylinder nicht direkt mit dem jeweils anderen Messerträger verbunden, sondern lediglich unter Zwischenschaltung einer zusätzlichen Gelenkverbindung. Entsprechend können hierdurch nur Schnittkräfte in vertikaler Richtung aufgenommen werden.

EP 2 033 730 A offenbart eine gattungsgemäße Schere mit den Merkmalen des Oberbegriffs von Anspruch 1.

Der Erfindung liegt daher die Aufgabe zugrunde, die beschriebenen Nachteile einer aufwändigen Ständerkonstruktion zu vermeiden und die für eine einwandfreie Funktion einer Schere für Flachmaterial erforderliche Konstruktion zu vereinfachen.

Diese Aufgabe wird erfindungsgemäß durch eine Schere mit den Merkmalen von Anspruch 1 gelöst. Vorteilhafte Weiterbildungen der Erfindung sind in den abhängigen Ansprüchen definiert.

Eine erfindungsgemäße Schere dient zum Schneiden von Flachmaterial, und umfasst einen Obermesserträger und einen Untermesserträger, wobei zumindest der Obermesserträger oder der Untermesserträger auf- und abbeweglich geführt ist. Der bewegliche Messerträger wird durch zumindest eine Verstelleinrichtung relativ zu dem jeweils anderen Messerträger bewegt, wobei der bewegliche Messerträger dabei von der Verstelleinrichtung geführt wird. Die Verstelleinrichtung ist derart ausgebildet, dass sie alle Schnittkräfte aufnimmt. Der Obermesserträger und der Untermesserträger sind allein durch die Verstelleinrichtung miteinander verbunden. Der bewegliche Messerträger ist mittels der Verstelleinrichtung geführt. Die Verstelleinrichtung ist derart ausgebildet, dass sie auch alle Querkräfte aufnimmt. Die Verstelleinrichtung ist als Hydraulikzylinder ausgebildet und weist genau zwei solcher Hydraulikzylinder auf, wobei der Obermesserträger und der Untermesserträger länglich ausgebildet sind und die Hydraulikzylinder an den jeweiligen Enden der Messerträger angebracht sind, wobei die jeweiligen Kolbenstangen der Hydraulikzylinder mit dem Obermesserträger verbunden sind.

Der Erfindung liegt die wesentliche Erkenntnis zugrunde, dass die Verstelleinrichtung gleichzeitig dazu dient, den beweglichen Messerträger bei seiner Auf- und Abbewegung zu führen, wobei die Verstelleinrichtung alle auftretenden Schnitt- und Querkräfte aufnimmt. Anders ausgedrückt, übernimmt die Verstelleinrichtung gleichzeitig die Aufgabe eines Ständers, um den beweglichen Messerträger zu führen. Somit kommt der Verstelleinrichtung eine Doppelfunktion zu, verbunden mit den Vorteilen von weniger Bauteilen und kompakteren Abmessungen. Weitere Vorteile bestehen in Kosteneinsparungen bei der Herstellung der Schere und deren Montage und Wartung.

Für eine betriebssichere Ausführung der Schere ist es von Bedeutung, dass sowohl die Verstelleinrichtung als auch die weiteren Baulemente der Schere gegenüber standardmäßig zu beziehenden Konstruktionselementen kräftiger und stabiler ausgeführt sind. Hierdurch ist es möglich, dass die Verstelleinrichtung die genannte Doppelfunktion übernimmt.

Die Verstelleinrichtung ist als Hydraulikzylinder ausgebildet

Die Kolbenstange eines solchen Hydraulikzylinders weist dabei mindestens die Dimensionen von herkömmlich bekannten Führungselementen z.B. in Form von Rundstangen auf. Auch die Lagerung der Kolbenstange des Hydraulikzylinders entspricht in der Auslegung in etwa der der ursprünglichen Führungselemente.

Die Aufnahme der während des Schneidvorganges entstehenden Querkräfte können vorteilhaft durch Gleit- oder Wälzlagerungen aufgefangen werden, die für die Verstelleinrichtung vorgesehen sind.

Nachstehend ist ein Ausführungsbeispiel der Erfindung anhand von schematisch vereinfachten Zeichnungen näher beschrieben. Es zeigen:
- Figur 1: eine erfindungsgemäße Schere in Perspektivansicht, und
- Figur 2: die Schere von Figur 1 in einer Seitenansicht von vorne.

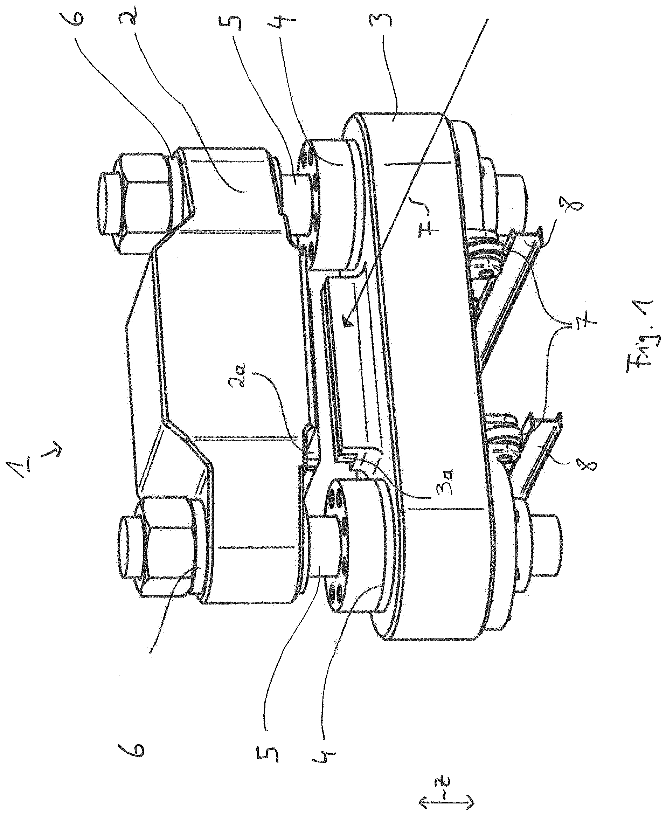

Figur 1 zeigt eine erfindungsgemäße Schere 1 in einer perspektivischen Darstellung. Die Schere 1 umfasst einen Obermesserträger 2 und einen Untermesserträger 3. An dem Obermesserträger 2 und an dem Untermesserträger 3 sind ein Obermesser 2a bzw. ein Untermesser 3a angebracht. Der Obermesserträger 2 ist relativ zu dem Untermesserträger 3 beweglich. Hierzu sind an dem Untermesserträger 3 zwei Hydraulikzylinder 4 angebracht, wobei die jeweiligen Kolbenstangen 5 der Hydraulikzylinder 4 mit dem Obermesserträger 2 verbunden sind. Durch ein Ansteuern der Hydraulikzylinder 4 kann der Obermesserträger 2 relativ zum Untermesserträger 3 auf- und abbewegt werden, d.h. in Richtung des in Figur 1 gezeigten Pfeils z.

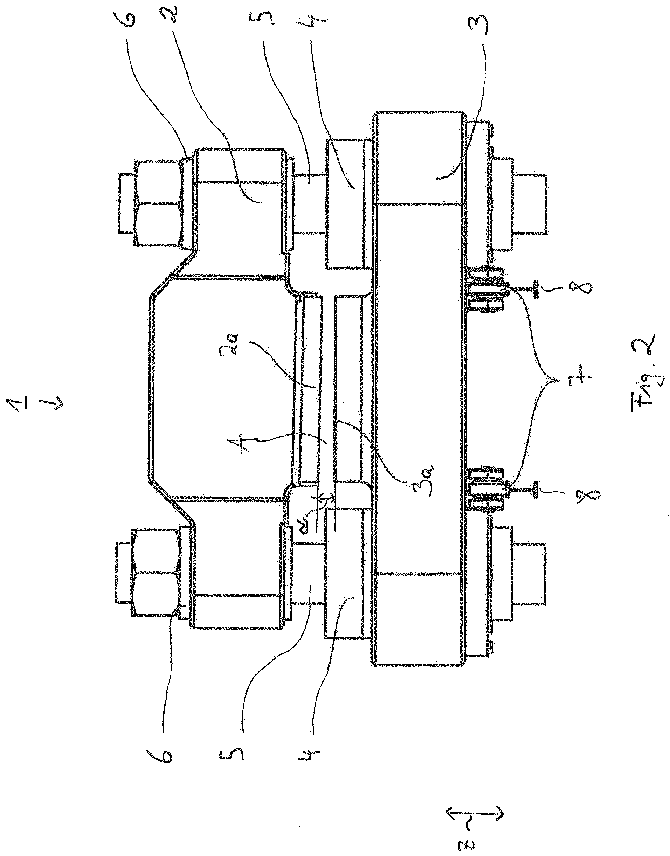

Figur 2 zeigt die Schere 1 von Figur 1 in einer Seitenansicht von vorne. Dies verdeutlicht, dass der Untermesserträger 3 als Aufnahmeelement für die beiden Hydraulikzylinder 4 dient. Bei einem Betätigen der Hydraulikzylinder 4 wird der Obermesserträger 2 auf- und abbewegt, wobei der Untermesserträger 3 in vertikaler Richtung (z-Richtung) ortsunveränderlich bzw. feststehend ist.

Bei der in Figur 2 gezeigten Position des Obermesserträgers 2 ist zwischen den Messern 2a, 3a ein Abstand A gebildet. Für ein Zuschneiden eines (nicht gezeigten) Flachmaterials wird der Obermesserträger 2 durch ein Betätigen der Hydraulikzylinder 4 in Richtung des Untermesserträgers 3 bewegt. Die Hydraulikzylinder 4 dienen hierbei gleichzeitig als Führungselemente für den Obermesserträger 2 und sind dabei derart ausgebildet, dass sie zusätzlich zu den Schnittkräften, die in z-Richtung auftreten, auch Querkräfte, die in einer Förderrichtung des Flachmaterials auftreten können, aufnehmen. Die Förderrichtung, in der das Flachmaterial durch die Schere 1 hindurch und an den Messern 2a, 3a vorbeibewegt wird, ist in Figur 1 vereinfacht durch einen Pfeil F angedeutet.

Bei einer Änderung der Band- bzw. Blechdecke des Flachmaterials ist es notwendig, den Abstand A daran anzupassen. Dies kann durch eine Exzenterbuchse 6 erfolgen, die als Aufnahme für eine Kolbenstange 5 eines entsprechenden Hydraulikzylinders 4 ausgebildet sein kann und jeweils seitlich an den Enden des Obermesserträgers 2 vorgesehen ist. Durch ein Verdrehen dieser Exzenterbuchsen 6 ist es möglich, einen vorbestimmten Abstand des Obermesserträgers 2 bzw. des daran angebrachten Obermessers 2a zum gegenüberliegenden Untermesserträger 3 in einer Ausgangstellung der Hydraulikzylinder 4 einzustellen. Gleiches gilt für die Winkelstellung des Obermessers 2a relativ zum Untermesser 3a, d.h. den Winkel α (vgl. Figur 2), um den das Obermesser 2a mit seiner Längsachse in einer Ausgangsstellung des Obermesserträgers 2 relativ um Untermesser 3a geneigt ist. Dies wird durch die Verstellung von nur einer Exzenterbuchse 6 an einer Seite des Obermesserträgers 2 erreicht. Bei Verwendung von runden Führungselementen ist es leicht möglich, die bei einer Änderung der Band- bzw. Blechdicke oder -qualität notwendige neue Einstellung des Schnittspaltes durch eine Verdrehung der als Aufnahme für die Kolben- bzw. Führungsstangen verwendeten Exzenterbuchsen 6 zu bewerkstelligen. Diese Exzenterbuchsen 6 können alternativ zur Darstellung in der Zeichnung auch auf der Seite der Krafteinbringung, d.h. d.h. auf der Seite der Hydraulikzylinder 4 und somit an dem Untermesserträger 3 angeordnet sein.

Mittels einer geeigneten Verbindungsstelle zwischen der Kolbenstange des Hydraulikzylinders und dem Obermesserträger 2 ist es möglich, die Neigung des Obermesserträgers 2 bezüglich der Horizontalen und damit den Winkel α, den das Obermesser 2a mit seiner Längsachse bezüglich des Untermessers 3a einnimmt, einzustellen.

Weiter alternativ ist es möglich, den Obermesserträger 3 in einer Rahmeneinrichtung oder dergleichen fest zu lagern, wobei dann der Untermesserträger 3 relativ dazu beweglich ist. Dies kann über Hydraulikzylinder 4 erfolgen, in gleicher Weise wie in den Figuren 1 und 2 gezeigt.

Sowohl der Obermesserträger 2 als auch der Untermesserträger 3 sind zur Aufnahme von Quer- und Biegekräften ausreichend dimensioniert.

An einer Unterseite des Untermesserträgers 3 sind Rollen 7 angebracht, die auf Linearführungen 8 in Form von Schienen abrollen. Für das Quertrennen eines sich mit kontinuierlichem Vorschub bewegenden Flachmaterials bewegt sich die gesamte Schere ebenfalls in Förderrichtung F, indem die Rollen 7 auf den Schienen 8 abrollen. Diese Bewegung der Schere 1 verläuft zeitlich synchron zur Dauer des Schneidvorgangs, d.h. mit der Bewegung des Obermesserträgers 2 in Richtung des Untermesserträgers 3. Die Beschleunigung der Schere 1 heraus aus einer insbesondere ruhenden Ausgangsstellung, die Beibehaltung einer Bewegung der Schere 1 synchron zur Bandgeschwindigkeit des geförderten Flachmaterials und das Abbremsen nach Beendigung des Schneidvorgangs kann durch einen oder mehrere Hydraulikzylinder oder andere gleichwirkende mechanische Energiespeichersysteme, insbesondere Federpakete, realisiert werden, die mit dem Untermesserträger 3 geeignet verbunden sind bzw. in Wirkverbindung damit stehen. Am Beispiel eines Hydraulikzylinders erläutert, ohne dass hierin eine Einschränkung zu sehen ist, versteht sich, dass der Hydraulikzylinder für den Untermesserträger 3 gleichzeitig als Antriebs- und Abbremseinrichtung dient. Zweckmäßigerweise und im Hinblick auf die horizontale Bewegung des Untermesserträgers 3 ist der Hydraulikzylinder dabei liegend angeordnet. Zusätzlich kann ein solcher Hydraulikzylinder als Rücktransporteinrichtung dienen, d.h. den Untermesserträger 3 nach Beendigung eines Schneidvorgangs wieder in seine ursprüngliche Ausgangsstellung zurückverfahren, so dass anschließend ein erneuter Schneidvorgang ausgeführt werden kann. In dieser Weise sind die Rücktransporteinrichtung und die Abbrems- bzw. Antriebseinrichtung durch den Hydraulikzylinder einstückig als bauliche Einheit ausgebildet.

Optional kann die Schere 1 zumindest eine insbesondere hydraulisch betätigte Klemmbacke aufweisen, die mit dem Flachmaterial zusammen wirken kann. Bei einem Verklemmen der Klemmbacke mit bzw. an dem Flachmaterial wird die Fördergeschwindigkeit des Flachmaterials auf die Schere 1 übertragen. Hierdurch kann eine Beschleunigung des Untermesserträgers 3 auf die Fördergeschwindigkeit des Flachmaterials erzielt werden. Ggf. können dann weitere Antriebsmittel zu diesem Zweck, z.B. Hydraulikzylinder, weggelassen werden.

Durch die erfindungsgemäße Zusammenfassung von Führungs- und Krafteinleitungselementen, nämlich in Form von genau zwei Hydraulikzylindern stellt sich der Aufbau der vorgestellten Schere sehr viel einfacher dar als bei herkömmlichen Scheren. Die Stabilität und damit die Schnittqualität bleiben unverändert und erschließen dadurch weitergehende universale Einsatzmöglichkeit. Die kompaktere Gestaltung der Schere ermöglicht es, in engeren Einbauräumen Platz zu finden. Durch die geringere Zahl an Einzelteilen ergeben sich Vorteile in der Montage- und Wartungsfreundlichkeit und in der kostengünstigeren Herstellung.

## Patentansprüche

1. Schere (1), insbesondere Querteilschere, zum Schneiden von Flachmaterial, umfassend einen Obermesserträger (2) und einen Untermesserträger, wobei zumindest der Obermesserträger (2) oder der Untermesserträger (3) auf- und abbeweglich geführt und durch zumindest eine Verstelleinrichtung (4) relativ zu dem jeweils anderen Messerträger (3, 2) bewegbar ist, wobei die Verstelleinrichtung (4, 5) derart ausgebildet ist, dass sie alle Schnittkräfte aufnimmt, **dadurch gekennzeichnet,**
**dass** der Obermesserträger (2) und der Untermesserträger (3) allein durch die Verstelleinrichtung (4, 5) miteinander verbunden sind,
**dass** der bewegliche Messerträger (2, 3) mittels der Verstelleinrichtung (4, 5) geführt ist und die Verstelleinrichtung (4, 5) derart ausgebildet ist, dass sie auch alle Querkräfte aufnimmt, und
**dass** die Verstelleinrichtung als Hydraulikzylinder (4) ausgebildet ist und genau zwei solcher Hydraulikzylinder (4) aufweist, wobei der Obermesserträger (2) und der Untermesserträger (3) länglich ausgebildet sind und die Hydraulikzylinder (4) an den jeweiligen Enden der Messerträger (2, 3) angebracht sind, wobei die jeweiligen Kolbenstangen (5) der Hydraulikzylinder (4) mit dem Obermesserträger (2) verbunden sind.

2. Schere (1) nach Anspruch 1, **dadurch gekennzeichnet, dass** ein Schnittspalt (S) zwischen dem Obermesserträger (2) und dem Untermesserträger (3) über eine Exzenterbuchse (6) () oder durch eine Verstellung der Verstelleinrichtung (5) an dem Obermesserträger (2) bzw. an dem Untermesserträger (3) einstellbar ist.

3. Schere (1) nach einem der vorhergehenden Ansprüche, **dadurch gekennzeichnet, dass** die Schere mittels einer Linearführung (7, 8) relativ zum Untergrund beweglich ist und ausgehend von einer insbesondere ruhenden Ausgangsstellung durch zumindest eine Antriebseinrichtung auf eine Fördergeschwindigkeit des Flachmaterials beschleunigbar ist, wobei die Bewegung der Schere (1) während des Schneidvorgangs synchron zur Fördergeschwindigkeit des Flachmaterials gewählt ist.

4. Schere (1) nach Anspruch 3, **dadurch gekennzeichnet, dass** die zumindest eine Antriebseinrichtung in Form eines Hydraulikzylinders, eines mechanischen Energiespeichersystems, insbesondere mit zumindest einem Federpaket, und/oder aus einer Klemmeinrichtung insbesondere in Form einer hydraulischen Klemmbacke, die an dem bewegten Flachmaterial festklemmbar ist, ausgebildet ist.

5. Schere (1) nach Anspruch 3 oder 4, **dadurch gekennzeichnet, dass** zumindest eine Abbremseinrichtung vorgesehen ist, mit der nach Ausführung des Schneidvorganges die Bewegungsenergie der Schere zu deren Abbremsung auffangbar ist, vorzugsweise, dass die Abbremseinrichtung als Hydraulikzylinder oder in Form eines mechanischen Energiespeichersystems, insbesondere mit zumindest einem Federpaket, ausgebildet ist.

6. Schere (1) nach einem der Ansprüche 3 bis 5, **dadurch gekennzeichnet, dass** zumindest eine Rücktransporteinrichtung vorgesehen ist, mit der nach Beendigung des Schneidvorganges die Schere in ihre Ausgangsstellung rückbringbar ist, vorzugweise, dass die Rücktransporteinrichtung als Hydraulikzylinder oder in Form eines mechanischen Energiespeichersystems, das insbesondere ein Federpaket aufweist, ausgebildet ist.

7. Schere (1) nach Anspruch 6, **dadurch gekennzeichnet, dass** die Abbremseinrichtung und die Rücktransporteinrichtung einstückig und als Baueinheit ausgebildet sind.

## Claims

1. Shears (1), particularly transverse dividing shears, for cutting flat material, comprising an upper knife carrier (2) and a lower knife carrier, wherein at least the upper knife carrier (2) or the lower knife carrier (3) is guided to be movable upwardly and downwardly and is movable relative to the respective other knife carrier (3, 2) by at least one adjusting device (4), wherein the adjusting device (4, 5) is constructed so that it accepts all cutting forces,
**characterised in that**
the upper knife carrier (2) and the lower knife carrier (3) are connected together solely by the adjusting device (4, 5),
the movable knife carrier (2, 3) is guided by means of the adjusting device (4, 5) and the adjusting device (4, 5) is constructed in such a way that it also accepts all transverse forces and
the adjusting device is constructed as hydraulic cylinders (4) and comprises exactly two such hydraulic cylinders (4), wherein the upper knife carrier (2) and the lower knife carrier (3) are of elongate construction and the hydraulic cylinders (4) are mounted at the respective ends of the knife carriers (2, 3), wherein the respective piston rods (5) of the hydraulic cylinders (4) are connected with the upper knife carrier (2).

2. Shears (1) according to claim 1, **characterised in that** a cutting gap (S) between the upper knife carrier (2) and the lower knife carrier (3) is settable by way of an eccentric bush (6) or by adjustment of the adjusting device (5) at the upper knife carrier (2) or at the lower knife carrier (3).

3. Shears (1) according to one of the preceding claims, **characterised in that** the shears are movable relative to the foundation by means of a linear guide (7, 8) and starting from, in particular, a static starting setting are accelerated by at least one drive device to a conveying speed of the flat material, wherein the movement of the shears (1) during the cutting process is selected to be synchronous with the conveying speed of the flat material.

4. Shears (1) according to claim 3, **characterised in that** the at least one drive device is constructed in the form of a hydraulic cylinder, a mechanical energy storage system, particularly with at least one spring packet, and/or from a clamping device in the form of, in particular, a hydraulic clamping jaw, which can be firmly clamped against the moved flat material.

5. Shears (1) according to claim 3 or 4, **characterised in that** at least one brake device is provided, by which after performance of the cutting process the movement energy of the shears can be collected for braking thereof, preferably **in that** the braking device is constructed as hydraulic cylinders or in the form of a mechanical energy storage system, particularly with at least one spring packet.

6. Shears (1) according to any one of claims 3 to 5, **characterised in that** at least one return transport device is provided by which after the conclusion of the cutting process the shears can be brought back into the starting setting thereof, preferably **in that** the return transport device is constructed as hydraulic cylinders or in the form of a mechanical energy storage system, which comprises, in particular, a spring packet.

7. Shears (1) according to claim 6, **characterised in that** the braking device and the return transport device are constructed integrally and as a constructional unit.

## Revendications

1. Cisaille (1), en particulier cisaille à élément transversal, pour la coupe d'un matériau plat, comprenant un support de lame supérieur (2) et un support de lame inférieur, au moins le support de lame supérieur (2) ou le support de lame inférieur (3) étant guidé dans un mouvement ascendant et descendant et étant mobile, via au moins un mécanisme de déplacement (4), par rapport à l'autre support de lame respectif (3, 2), le mécanisme de déplacement (4, 5) étant réalisé d'une manière telle qu'il absorbe toutes les forces de coupe, **caractérisée en ce que** le support de lame supérieur (2) et le support de lame inférieur (3) sont reliés l'un à l'autre uniquement via le mécanisme de déplacement (4, 5) ; **en ce que** le support de lame mobile (2, 3) est guidé au moyen du mécanisme de déplacement (4, 5) et le mécanisme de déplacement (4, 5) est réalisé d'une manière telle qu'il absorbe toutes les forces de coupe ; et **en ce que** le mécanisme de déplacement est réalisé sous la forme de cylindres hydrauliques (4) et présente précisément deux cylindres hydrauliques (4) de ce type, dans lequel le support de lame supérieur (2) et le support de lame inférieur (3) sont réalisés en une configuration oblongue et les cylindres hydrauliques (4) sont appliqués aux extrémités respectives des supports de lames (2, 3), les tiges de pistons respectives (5) des cylindres hydrauliques (4) étant reliées au support de lame supérieur (2).

2. Cisaille (1) selon la revendication 1, **caractérisée en ce qu'**on peut régler une fente de coupe (S) entre le support de lame supérieur (2) et le support de lame inférieur (3) via une douille excentrique (6) ou via un déplacement du mécanisme de déplacement (5) contre le support de lame supérieur (2), respectivement contre le support de lame inférieur (3).

3. Cisaille (1) selon l'une quelconque des revendications précédentes, **caractérisée en ce que** la cisaille est mobile, au moyen d'un guidage linéaire (7, 8) par rapport au sol et peut être accélérée à partir d'une position de départ en particulier au repos via au moins un mécanisme d'entraînement jusqu'à une vitesse de transport du matériau plat, le mouvement de la cisaille (1) au cours du processus de coupe étant sélectionné de manière synchrone à la vitesse de transport du matériau plat.

4. Cisaille (1) selon la revendication 3, **caractérisée en ce que** ledit au moins un mécanisme d'entraînement est réalisé sous la forme d'un cylindre hydraulique, d'un système mécanique d'accumulation d'énergie, en particulier comprenant au moins un paquet de ressorts et/ou d'un mécanisme de serrage, en particulier sous la forme d'une mâchoire de serrage hydraulique qui peut venir se serrer contre le matériau plat en mouvement.

5. Cisaille (1) selon la revendication 3 ou 4, **caractérisée en ce qu'**on prévoit au moins un mécanisme de freinage avec lequel, après la mise en oeuvre du processus de coupe, l'énergie cinétique de la cisaille peut être captée pour son freinage, de préférence, **en ce que** le mécanisme de freinage est réalisé sous la forme de cylindres hydrauliques ou sous la forme d'un système mécanique d'accumulation d'énergie, en particulier comprenant au moins un paquet de ressorts.

6. Cisaille (1) selon l'une quelconque des revendications 3 à 5,
**caractérisée en ce qu'**on prévoit au moins un mécanisme de transport en retour avec lequel, au terme du processus de coupe, la cisaille peut être ramenée dans sa position de départ, de préférence **en ce que** le mécanisme de transport en retour est réalisé sous la forme de cylindres hydrauliques ou sous la forme d'un système mécanique d'accumulation d'énergie en particulier comprenant au moins un paquet de ressorts.

7. Cisaille (1) selon la revendication 6, **caractérisée en ce que** le mécanisme de freinage et le mécanisme de transport en retour sont réalisés en une seule pièce et sous la forme d'une unité constitutive.
